(19) Europäisches Patentamt
European Patent Office
Office européen des brevets

(11) Publication number : 0 249 809 B1

(12) # EUROPEAN PATENT SPECIFICATION

(45) Date of publication of patent specification : 27.12.91 Bulletin 91/52

(51) Int. Cl.$^5$ : C08G 69/44, C08G 64/00

(21) Application number : 87108039.6

(22) Date of filing : 03.06.87

(54) **Copolyamidecarbonates and method of preparation from cyclic aromatic polycarbonate oligomers.**

(30) Priority : 16.06.86 US 875025

(43) Date of publication of application : 23.12.87 Bulletin 87/52

(45) Publication of the grant of the patent : 27.12.91 Bulletin 91/52

(84) Designated Contracting States : DE FR GB IT NL

(56) References cited :
EP-A- 0 050 811
EP-A- 0 162 379
FR-A- 1 343 977
GB-A- 1 112 943
US-A- 3 225 114

(56) References cited :
PATENT ABSTRACTS OF JAPAN, vol. 10, no. 339 (C-385)[2395], 15th November 1986; & JP - A - 61 143 476 (KURARAY CO.) 01-07-1986
CHEMICAL ABSTRACTS, vol. 77, no. 4, 24th July 1972, page 4, abstract no. 20079a, Columbus, Ohio, US; C. GIORI "Synthesis of alternate diamide-carbonate copolymers", & POLYM. PREPR. AMER. CHEM. 1970, 11(2), 1023-1026

(73) Proprietor : GENERAL ELECTRIC COMPANY
1 River Road
Schenectady New York 12305 (US)

(72) Inventor : Evans, Thomas Lane
3 Earl Court
Clifton Park New York 12065 (US)

(74) Representative : Catherine, Alain et al
General Electric France Service de Propriété Industrielle 18 Rue Horace Vernet
F-92136 Issy-Les-Moulineaux Cedex (FR)



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to condensation copolymers and methods for their preparation. More particularly, it relates to copolyamidecarbonates.

GB-A-1112943 describes the polymerization of lactams by an anionic catalyst/co-catalyst polymerization process which comprises preparing a first mixture of a lactam and an anionic catalyst, preparing a second mixture containing a lactam and a co-catalyst and mixing both mixtures to polymerize the lactam. As co-catalyst there may be used Lexan 106, triphenyl cyanurate, N-acetylcaprolactam, sebaçoyl bis-pyrazole and β-lactone. All these co-catalysts are said to be equivalent in the polymerization process.

In U.S-A.4,431,795, there are described copolymers prepared by the reaction of lactams with monomeric cyclic aliphatic carbonates in the presence of alkaline catalysts. The products are described as being largely random rather than block copolymers, and containing substantial proportions of urethane and carboxylic acid ester groups. They are further described as being useful as plastics, adhesives, plasticizers and lacquers.

It is well known that aromatic polymers are often more rigid than aliphatic polymers. This increased rigidity is accompanied by an improvement in certain properties, notably thermal stability and chemical resistance at high temperatures. Accordingly, it is of interest to develop a method for preparing copolymers similar to those in the above-identified patent, but containing a substantial proportion of aromatic groups.

A principal object of the present invention, therefore, is to provide copolyamidecarbonates containing aromatic groups.

A further object is to provide a convenient method for the preparation of such copolyamidecarbonates.

Other objects will in part be obvious and will in part appear hereinafter.

In one of its aspects, the present invention is directed to copolyamidecarbonates comprising structural units of the formulas:

$$\text{(I)}\qquad -R^1-\overset{\displaystyle O}{\overset{\|}{C}}-NH- \qquad \text{and}$$

$$\text{(II)}\qquad -O-R^2-O-\overset{\displaystyle O}{\overset{\|}{C}}-$$

Wherein $R^1$ is divalent aliphatic hydrocarbon or substituted hydrocarbon radical containing a chain of 2-20 carbon atoms and at least 60% of the total number of $R^2$ values are divalent aromatic organic radicals, the balance thereof being aliphatic, alicyclic or aromatic, said copolyamidecarbonate being prepared by reacting an anionic intermediate of at least one lactam with at least one cyclic polycarbonate oligomer, the mole ratio of cyclic oligomer, based on structural units, to lactam being from 0.5 :1 to 5:1.

The $R^1$ value in the copolyamidecarbonates of this invention is a divalent aliphatic hydrocarbon or substituted hydrocarbon radical. Any subtituents present thereon should not substantially affect the character or reactivity of the radical; illustrative substituents are halo, hydroxy, alkoxy, acyloxy, cyano, carbalkoxy and amido. It is usually a hydrocarbon radical and preferably an alkylene radical.It contains a chain of 2-20 carbon atoms,preferably 4-12 carbon atoms, separating the valence bonds in formula I.

At least 60% of the total number of $R^2$ values are aromatic radicals and the balance may be aliphatic, alicyclic, aromatic or mixed; those which are aliphatic, or alicyclic generally contain up to 8 carbon atoms. The $R^2$ values may contain substituents such as halo, nitro, alkoxy, and lactone. Most often, however, all $R^2$ radicals are hydrocarbon radicals.

Preferably at least 80% of the total number of $R^2$ values in the cyclic oligomer mixtures, and most desirably all of said $R^2$ values, are aromatic. The aromatic $R^2$ radicals preferably have the formula

$$\text{(III)}\ -A^1-Y^1-A^2-$$

wherein each of $A^1$ and $A^2$ is a monocyclic divalent aromatic radical and $Y^1$ is a bridging radical in which one or two atoms separate $A^1$ from $A^2$. The free valence bonds in formula II are usually in the meta or para positions of $A^1$ and $A^2$ in relation to $Y^1$.

In formula III, the $A^1$ and $A^2$ values may be unsubstituted phenylene or substituted derivatives thereof, illustrative substituents (one or more) being alkyl, alkenyl, halo (especially chloro and/or bromo), nitro, alkoxy and the like. Unsubstituted phenylene radicals are preferred. Both $A^1$ and $A^2$ are preferably p-phenylene, although both may be o- or m-phenylene or one o- or m-phenylene and the other p-phenylene.

The bridging radical, $Y^1$, is one in which one or two atoms, preferably one, separate $A^1$ from $A^2$. It is most often a hydrocarbon radical and particularly a saturated radical such as methylene, cyclohexylmethylene, 2-[2.2.1]-bicycloheptylmethylene, ethylene, isopropylidene, neopentylidene, cyclohexylidene, cyclopentadecylidene, cyclododecylidene or adamantylidene, especially a gem-alkylene (alkylidene) radical. Also included, however, are unsaturated radicals and radicals which contain atoms other than carbon and hydrogen; for example, 2,2-dichloroethylidene, carbonyl, phthalidylidene, oxy, thio, sulfoxy and sulfone.

The $R^2$ values may be considered as being derived from dihydroxy compounds of the formula HO-$R^2$-OH, especially dihydroxyaromatic compounds and preferably bisphenols of the Formula HO-$A^1$-$Y^1$-$A^2$-OH. The following dihydroxy compounds are illustrative:

Ethylene glycol
Propylene glycol
1,3-Propanediol
1,4-Butanediol
1,6-Hexanediol
1,12-Dodecanediol
2-Ethyl-1,10-decanediol
2-Butene-1,4-diol
1,3-Cyclopentanediol
1,.3-Cyclohexanediol
1,4-Cyclohexanediol
1,4-Bis(hydroxymethyl)benzene (which is a vinylog of ethylene glycol and has similar properties)
Resorcinol
4-Bromoresorcinol
Hydroquinone
4,4-Dihydroxybiphenyl
1,6-Dihydroxynaphthalene
2,6-Dihydroxynaphthalene
Bis(4-hydroxyphenyl)methane
Bis(4-hydroxyphenyl)diphenylmethane
Bis(4-hydroxyphenyl)-1-naphthylmethane
1,1-Bis(4-hydroxyphenyl)ethane
1,2-Bis(4-hydroxyphenyl)ethane
1,1-Bis(4-hydroxyphenyl)-1-phenylethane
2,2-Bis(4-hydroxyphenyl)propane ("bisphenol A")
2-(4-Hydroxyphenyl)-2-(3-hydroxyphenyl) propane
2,2-Bis(4-hydroxyphenyl)butane
1,1-Bis(4-hydroxyphenyl)isobutane
1,1-Bis(4-hydroxyphenyl)cyclohexane
1,1-Bis(4-hydroxyphenyl)cyclododecane
Trans-2,3-bis(4-hydroxyphenyl)-2-butene
2,2-Bis(4-hydroxyphenyl)adamantane
α,α'-Bis(4-hydroxyphenyl)toluene
Bis(4-hydroxyphenyl)acetonitrile
2,2-Bis(3-methyl-4-hydroxyphenyl)propane
2,2-Bis(3-ethyl-4-hydroxyphenyl)propane
2,2-Bis(3-n-propyl-4-hydroxyphenyl)propane
2,2-Bis(3-isopropyl-4-hydroxyphenyl)propane
2,2-Bis(3-sec-butyl-4-hydroxyphenyl)propane
2,2-Bis(3-t-butyl-4-hydroxyphenyl)propane
2,2-Bis(3-cyclohexyl-4-hydroxyphenyl)propane
2,2-Bis(3-allyl-4-hydroxyphenyl)propane
2,2-Bis(3-methoxy-4-hydroxyphenyl)propane
2,2-Bis(3,5-dimethyl-4-hydroxyphenyl)propane
2,2-Bis(2,3,5,6-tetramethyl-4-hydroxyphenyl)propane
2,2-Bis(3-5-dichloro-4-hydroxyphenyl)propane

2,2-Bis(3,5-dibromo-4-hydroxyphenyl)propane
2,2-Bis(2,6-dibromo-3,5-dimethyl-4-hydroxyphenyl)propane
α,α-Bis(4-hydroxyphenyl)toluene
α,α,α′,α′-Tetramethyl-α,α′-bis(4-hydroxyphenyl)-p-xylene
2,2-Bis(4-hydroxyphenyl)hexafluoropropane
1,1-Dichloro-2,2-bis(4-hydroxyphenyl)ethylene
1,1-Dibromo-2,2-bis(4-hydroxyphenyl)ethylene
1,1-Dichloro-2,2-bis(5-phenoxy-4-hydroxyphenyl)ethylene
4,4′-Dihydroxybenzophenone
3,3-Bis(4-hydroxyphenyl)-2-butanone
1,6-Bis(4-hydroxyphenyl)-1,6-hexanedione
Bis(4-hydroxyphenyl) ether
Bis(4-hydroxyphenyl) sulfide
Bis(4-hydroxyphenyl) sulfoxide
Bis(4-hydroxyphenyl) sulfone
Bis(3,5-dimethyl-4-hydroxyphenyl) sulfone
9,9-Bis(4-hydroxyphenyl)fluorene
2,7-Dihydroxypyrene
6,6′-Dihydroxy-3,3,3′,3′-tetramethylspiro-(bis)indane ("spirobiindane bisphenol")
3,3-Bis(4-hydroxyphenyl)phthalide
2,6-Dihydroxydibenzo-p-dioxin
2,6-Dihydroxythianthrene
2,7-Dihydroxyphenoxathiin
2,7-Dihydroxy-9,10-dimethylphenazine
3,6-Dihydroxydibenzofuran
3,6-Dihydroxydibenzothiophene
2,7-Dihydroxycarbazole.

Bisphenol A is often preferred for reasons of availability and particular suitability for the purposes of the invention.

The copolyamidecarbonates of this invention may contain varying proportions and lengths of polyamide chains, comprising a plurality of interconnected moieties of formula I, and polycarbonate chains, comprising similarly interconnected moieties of formula II. They may also contain carbamate and ester moieties of the formulas.

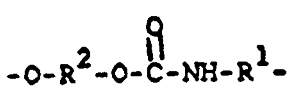 and

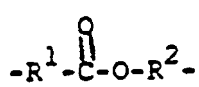 ,

as a result of amide-carbonate exchange.

The copolyamidecarbonates of this invention may be prepared by a method comprising the steps of (A) reacting at least one lactam of the formula

(IV) 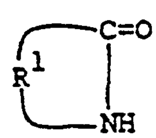 ,

wherein $R^1$ is as defined hereinabove, with a basic reagent to form an anionic intermediate, and (B) reacting said intermediate with at least one cyclic polycarbonate oligomer having the formula

(V) 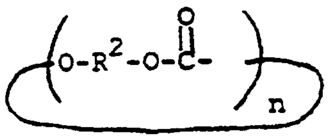 ,

wherein $R^2$ is as defined hereinabove and n is from 2 to 30. This method is another aspect of the invention.

Any one or more of a number of known lactams may be used. Preferred are those in which $R^1$ is a straight alkylene chain containing 4-12 carbon atoms. Illustrative lactams are pivalolactam, δ-valerolactam, ε-caprolactam and laurolactam, in which $R^1$ is $CH_2C(CH_3)_2$, $(CH_2)_4$, $(CH_2)_5$ and $(CH_2)_{11}$, respectively. ε-Caprolactam is especially preferred.

The basic reagents include inorganic bases such as the alkali and alkaline earth metals and their hydrides, hydroxides, carbonates and alkoxides, and strong organic bases such as tetraalkylammonium hydroxides, guanidines, and organometallins including Grignard reagents and organolithium reagents. The alkali metal hydrides, especially sodium hydride, are preferred.

The cyclic polycarbonate oligomers include dimers, trimers and tetramers of the type disclosed in the following U.S. patents:

| | |
|---|---|
| 3,155,683 | 3,386,954 |
| 3,274,214 | 3,422,119. |

Also included are cyclic polycarbonate oligomer mixtures of the type disclosed in European patent application 162,379.

Such cyclic oligomer mixtures consist essentially of oligomers having degrees of polymerization from 2 to 30 and preferably to 20, with a major proportion being up to 12 and a still larger proportion up to 15. Since they are mixtures of oligomers having varying degrees of polymerization, these compositions have relatively low melting points as compared to single compounds such as the corresponding cyclic trimer. The cyclic oligomer mixtures are generally liquid at temperatures above 300°C and most often at temperatures above 225°C.

The cyclic oligomer mixtures contain very low proportions of linear oligomers. In general, no more than 10% by weight, and most often no more than 5%, of such linear oligomers are present. The mixtures also usually contain low percentages (frequently less than 30% and preferably no higher than 20%) of polymers (linear or cyclic) having a degree of polymerization greater than 30. Such polymers are frequently identified hereinafter as "high polymer". These properties, coupled with the relatively low melting points and viscosities of the cyclic oligomer mixtures, contribute to their utility as resin precursors, especially for high molecular weight resins, as described hereinafter.

These mixtures may be prepared by a condensation reaction involving at least one bishaloformate having the formula

$$\text{(VI)} \qquad R^2(OCOX)_2$$

wherein $R^2$ is as defined hereinabove and X is chlorine or bromine. The condensation reaction typically takes place interfacially when a solution of said compound in a substantially non-polar organic liquid is contacted with a tertiary amine from a specific class and an aqueous alkali metal hydroxide solution. Also present may be other compounds, including oligomers of the formula

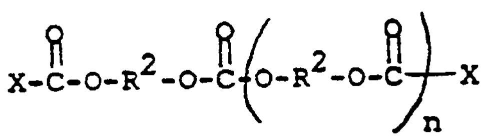 ,

wherein $R^2$ and X are as previously defined and n is a small number, typically 1-4.

While the X values in formula VI may be chlorine or bromine, the bischloroformates, in which X is chlorine, are most readily available and their use is therefore preferred. Frequent reference to bischloroformates will be made hereinafter, but it should be understood that other bishaloformates may be substituted therefor as appropriate.

The bischloroformate may be employed in substantially pure, isolated form. It is frequently preferred, however, to use a crude bischloroformate product. Suitable crude products may be prepared by any known methods for bischloroformate preparation. Typically, at least one bisphenol is reacted with phosgene in the presence of a substantially inert organic liquid.

In addition to the bisphenol bischloroformate, such crude bischloroformate products may contain oligomer bischloroformates. Most often, a major proportion of the crude product comprises monomer, dimer and trimer

bischloroformate. Higher oligomer bischloroformates, and monochloroformates corresponding to any of the aforementioned bischloroformates, may also be present, preferably only in trace amounts.

The tertiary amines useful for cyclic oligomer preparation ("tertiary" in this context denoting the absence of N-H bonds) generally comprise those which are oleophilic (i.e., which are soluble in and highly active in organic media, especially those used in the oligomer preparation method of this invention), and more particularly those which are useful for the formation of polycarbonates. Reference is made, for example, to the tertiary amines disclosed in U.S - A - 4,217,438 and 4,368,315. They include aliphatic amines such as triethylamine, tri-n-propylamine, diethyl-n-propylamine and tri-n-butylamine and highly nucleophilic heterocyclic amines such as 4-dimetylaminopyridine (which, for the purposes of this invention, contains only one active amine group). The preferred amines are those which dissolve preferentially in the organic phase of the reaction system; that is, for which the organic-aqueous partition coefficient is greater than 1. This is true because intimate contact between the amine and bischloroformate is essential for the formation of the cyclic oligomer mixture. For the most part, such amines contain at least 6 and preferably 6-14 carbon atoms.

The most useful amines are trialkylamines containing no branching on the carbon atoms in the 1- and 2-positions. Especially preferred are tri-n-alkylamines in which the alkyl groups contain up to 4 carbon atoms. Triethylamine is most preferred by reason of,its particular availability, low cost, and effectiveness in the preparation of products containing low percentages of linear oligomers and high polymers.

Suitable aqueous alkali or alkaline earth metal hydroxide or carbonate solutions (hereinafter sometimes designated "metal base") include lithium, sodium, potassium or calcium hydroxide or sodium or potassium carbonate. Sodium hydroxide is preferred because of its availability and relatively low cost. The concentration of the solution is not critical and may be 0.2-16 M.

The fourth essential component in the cyclic oligomer preparation method is a substantially non-polar organic liquid which forms a two-phase system with water. The identity of the liquid is not critical; provided it possesses the stated properties. Illustrative liquids are aromatic hydrocarbons such as toluene and xylene; substituted aromatic hydrocarbons such as chlorobenzene, o-dichlorobenzene and nitrobenzene; chlorinated aliphatic hydrocarbons such as chloroform and methylene chloride; and mixtures of the foregoing with ethers such as tetrahydrofuran. Methylene chloride is generally preferred.

To prepare the cyclic oligomer, the reagents and components are maintained in contact under conditions whereby the bischloroformate is present in low concentration. Actual high dilution conditions, requiring a large proportion of organic liquid, may be employed but are usually not preferred for cost and convenience reasons. Instead, simulated high dilution conditions known to those skilled in the art may be employed. For example, in one embodiment of the method the bischloroformate, and optionally other reagents, are added gradually to a reaction vessel containing solvent.

The reaction temperature is generally in the range of 0-50°C. It is most often 0-40°C and preferably 20-40°C.

For maximization of the yield and purity of cyclic oligomers as opposed to high polymer and insoluble and/or intractable by-products, it is preferred to use not more than 1.5 mole of bischloroformate per liter of organic liquid in the reaction system, including any liquid used to dissolve bischloroformate. Preferably, 0.003-1.0 mole of bischloroformate is used.

The molar proportions of the reagents constitute another important feature for yield and purity maximization. The preferred molar ratio of amine to bischloroformate used alone (calculated as bisphenol bischloroformate) is 0.1-1.0:1 and most often 0.15-0.6:1, and that of metal base to biscloroformate id 1.5-3:1 and most often 2-3:1.

Separation of the oligomer mixture from at least a portion of the high polymer and insoluble material present is sometimes necessary or desirable. When other reagents are added to the metal base and the preferred conditions and material proportions are otherwise employed, the cyclic oligomer mixture (obtained as a solution in the organic liquid) typically contains less than 30% by weight and frequently less than 20% of high polymer and insoluble material. When all of the preferred conditions described hereinafter are employed, the product may contain 10% or even less of such material. Depending on the intended use of the cyclic oligomer mixture, the separation step may then be unnecessary.

When such removal is necessary, it may be achieved by conventional operations such as combining the crude product, as a solid or in solution, with a non-solvent for said impurities. Illustrative non-solvents include ketones such as acetone and methyl isobutyl ketone and esters such as methyl acetate and ethyl acetate. Acetone is a particularly preferred non-solvent.

Recovery of the cyclic oligomers normally means merely separating the same from diluent (by known methods such as vacuum evaporation) and, optionally, from high polymer and other impurities. As previously suggested, the degree of sophistication of recovery will depend on such variables as the intended end use of the product.

The cyclic bisphenol A polycarbonate oligomer mixtures have been shown to contain oligomers having degrees of polymerization from 2 to 12, including substantially all of those from 2 to 6, with 50-70% (by weight) thereof being in the range from 2 to 5. It is generally preferred to use said mixtures as prepared, or optionally with separation of high polymer and/or insolubles.

The preparation of cyclic oligomer mixtures is illustrated by the following examples. All parts and percentages in the examples herein are by weight unless otherwise indicated. Temperatures are in degrees Celsius. Molecular weights are weight average unless otherwise indicated and were determined by gel permeation chromatography relative to polystyrene.

Examples 1-18

Bisphenol A bischloroformate was reacted with aqueous sodium hydroxide and triethylamine in an organic liquid (chloroform in Example 7, methylene chloride in all other examples) according to the following procedure: The bischloroformate was dissolved in half the amount of organic liquid employed and was added gradually, with slow stirring, to the balance of the reaction mixture. In Examples 1-10 and 12, the triethylamine was all originally present in the reaction vessel; in Examples 14-16, it was added gradually at the same time as the bischloroformates; and in Examples 11, 13, 17 and 18, it was added in equal increments at the beginning of bischloroformate addition and at intervals of 20% during said addition. The amount of sodium hydroxide used was 2.4 moles per mole of bischloroformate. After all the bischloroformate had been added, the mixture was stirred for about 2 minutes and the reaction was quenched by the addition of a slight excess of 1 M aqueous hydrochloric acid. The solution in the organic liquid was washed twice with dilute aqueous hydrochloric acid, dried by filtration through phase separation paper and evaporated under vacuum. The residue was dissolved in tetrahydrofuran and high polymer was precipitated by addition of acetone.

The reaction conditions for Examples 1-18 are listed in Table I together with the approximate percentage (by weight) of cyclic polycarbonate oligomer present in the product before high polymer precipitation. The weight average molecular weights of the cyclic oligomer mixtures were approximately 1300, corresponding to an average degree of polymerization of about 5.1.

TABLE I

| Example | Bischloroformate amt., mmole/l. org. liquid | Bischloroformate amt., total mmol. | NaOH molarity | Molar ratio, amine: bis-chloroformate | Temperature | Addition time, min. | % oligomer in product |
|---|---|---|---|---|---|---|---|
| 1 | 100 | 2 | 0.313 | 0.5 | 20 | 30 | 97 |
| 2 | 100 | 2 | 0.625 | 0.5 | 20 | 30 | 95 |
| 3 | 100 | 2 | 2.5 | 0.5 | 35 | 55 | 93 |
| 4 | 100 | 2 | 2.5 | 0.5 | 0 | 30 | 77 |
| 5 | 100 | 2 | 2.5 | 0.5 | 20 | 30 | 87 |
| 6 | 100 | 2 | 2.5 | 0.5 | 35 | 30 | 78 |
| 7 | 100 | 2 | 2.5 | 0.5 | 50 | 30 | 88 |
| 8 | 100 | 2 | 2.5 | 0.25 | 20 | 30 | 74 |
| 9 | 100 | 1 | 2.5 | 0.2 | 20 | 15 | 75 |
| 10 | 200 | 4 | 2.5 | 0.5 | 20 | 30 | 88 |
| 11 | 500 | 10 | 2.5 | 0.25 | 25 | 105 | 81 |
| 12 | 500 | 10 | 2.5 | 0.25 | 25 | 105 | 78 |
| 13 | 500 | 10 | 2.5 | 0.25 | 25 | 105 | 83 |
| 14 | 500 | 10 | 2.5 | 0.25 | 25 | 105 | 87 |
| 15 | 500 | 10 | 2.5 | 0.29 | 30 | 90 | 78 |
| 16 | 500 | 10 | 2.5 | 0.25 | 30 | 20 | 75 |
| 17 | 500 | 10 | 2.5 | 0.25 | 40-45 | 105 | 79 |
| 18 | 500 | 10 | 2.5 | 0.4 | 25 | 105 | 79 |

Example 19

Bisphenol A bischloroformate (2.0 mmol.) was reacted with aqueous sodium hydroxide and 4-dimethylaminopyridine in methylene chloride. The procedure employed was that of Example 1, except that 66.67 mmol. of bisphenol A per liter of methylene chloride was employed, the aqueous sodium hydroxide concentration was 5.0 M and the reaction temperature was about 25°C. The product comprised 85% cyclic oligomer.

Example 20

A crude bisphenol A bischloroformate product was analyzed as follows:

| | |
|---|---|
| Monomer bischloroformate | 58% |
| Dimer bischloroformate | 26% |
| Trimer bischloroformate | 10% |

and had an average degree of polymerization of about 1.5. An amount thereof containing 800 mmol. of monomer and oligomer bischloroformates, calculated as monomer bischloroformate, dissolved in one-half the total amount of methylene chloride used, and 450 ml. of 5 M aqueous sodium hydroxide were added over 37 minutes, with stirring, to a reaction vessel containing the balance of the methylene chloride. The total amount of bischloroformate was 400 , mmol. per liter of methylene chloride. Triethylamine, 200 mmol., was added in equal increments at intervals of 25% during bischloroformate addition. The peak reaction temperature was 37°. Upon workup as in Examples 1-18, there was obtained a product comprising 82% cyclic polyrarbonate oligomer.

Example 21

The crude bischloroformate composition used was a bisphenol A bischloroformate composition corresponding roughly to the dimer.

A 300-ml. Morton flask was charged with 128 ml. of methylene chloride, 10 ml. of water, 2 ml. of 4.9 M aqueous sodium hydroxide, 1.16 ml. of triethylamine and 5 ml. of 0.66 M aqueous disodium salt of bisphenol A. The mixture was heated under reflux, with stirring, as 40 ml. of the bischloroformate solution was added over 37 minutes. There were concurrently added an additional 35 ml. of the bisphenol A disodium salt solution over 32 minutes, 10 ml. of sodium hydroxide solution over 30 minutes, and 0..36 ml. of triethylamine in 10 equal increments 3-1/2 minutes apart. Stirring was continued for several minutes, after which the aqueous and organic phases were separated and the aqueous layer was washed with methylene chloride. The combined organic phases were washed once with dilute aqueous sodium hydroxide, twice with aqueous hydrochloric acid, once again with sodium hydroxide and twice with water, and dried over magnesium sulfate. Upon filtration, vacuum stripping and drying in an oven, there was obtained a white solid comprising the desired cyclic oligomer mixture, containing about 89% cyclic oligomers.

In step A of the method of this invention, the lactam is typically heated with the basic reagent at a temperature within the range of about 25-200°C, preferably about 90-150°C, until polymerization has taken place to some degree. The reaction may be performed in a conventional chemical reaction vessel or in suitable molding or extrusion apparatus.

The intermediate formed in step A is typically an anionic polyamide. In step B, said intermediate is reacted with at least one cyclic polycarbonate oligomer as described hereinabove. The reaction is ordinarily conveniently conducted at a temperature within the range applicable to step A.

The relative proportions of the reactants may be widely varied, depending on the molecular weight and other properties desired in the product. Most often, about 1-100 milliequivalents of alkaline reagent are used per mole of lactam. The mole ratio of cyclic oligomer (based on structural units) to lactam is from 0.5:1 to 5:1.

If desired, the reaction may be conducted in a substantially inert organic diluent. Typical diluents include toluene, xylene, chlorobenzene, o-dichlorobenzene and methylene chloride. The reaction may also be conducted in bulk.

The preparation of the copolyamidecarbonates of this invention is illustrated by the following example.

Example 22

ε-Caprolactam, 250 mg. (2.21 mmol.), was melted by heating to 140°C under nitrogen. Sodium hydride, 9 mg. (0.375 mmol.), was added and heating was continued for 1 $\frac{1}{2}$ hours. There was then added 100 mg. of a cyclic bisphenol A polycarbonate oligomer mixture similar to the product of Example 21. Heating was continued for $\frac{1}{2}$ hour, during which thickening of the reaction mixture was observed. An additional 900 mg. of cyclic polycarbonate oligomer mixture (total 3.94 mmol. based on structural units) was added and the reaction mixture was

heated for 6 hours at 250°C; an additional increase in viscosity was noted. The product was insoluble in organic solvents and was shown by infrared and DSC analysis to be an extensively interchanged product containing carbamate linkages.

The copolyamidecarbonates of this invention may be used as plastics, adhesives and lacquers.

## Claims

1. A copolyamidecarbonate comprising structural units of the formulas:

(I) $$-R^1-\overset{O}{\overset{\|}{C}}-NH-$$ and

(II) $$-O-R^2-O-\overset{O}{\overset{\|}{C}}-$$

wherein $R^1$ is a divalent aliphatic hydrocarbon or substituted hydrocarbon radical containing a chain of 2-20 carbon atoms and at least about 60% of the total number of $R^2$ values are divalent aromatic organic radicals, the balance thereof being aliphatic, alicyclic or aromatic, said copolyamidecarbonate being prepared by reacting an anionic intermediate of at least one lactam with at least one cyclic polycarbonate oligomer, the mole ratio of cyclic oligomer, based on structural units, to lactam being from 0.5 :1 to 5:1.

2. A composition according to claim 1 wherein $R^1$ is an alkylene radical.

3. A composition according to claim 2 wherein the $R^2$ radicals have the formula:

(III) $-A^1-Y^1-A^2-$

wherein each of $A^1$ and $A^2$ is a monocyclic divalent aromatic radical and $Y^1$ is a bridging radical in which one or two atoms separate $A^1$ from $A^2$.

4. A composition according to claim 3 wherein $R^1$ contains a chain of about 4-12 carbon atoms.

5. A composition according to claim 4 wherein each of $A^1$ and $A^2$ is p-phenylene and $Y^1$ is isopropylidene.

6. A composition according to claim 5 wherein $R^1$ is $(CH_2)_5$.

7. A method for preparing a copolyamidecarbonate which comprises the steps of (A) reacting at least one lactam of the formula

(IV) 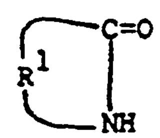 ,

wherein $R^1$ is a divalent aliphatic hydrocarbon or subbtituted hydrocarbon radical containing a chain of 2-20 carbon atoms, with a basic reagent to form an anionic intermediate, and (B) reacting said intermediate with at least one cyclic polycarbonate oligomer having the formula

(V) 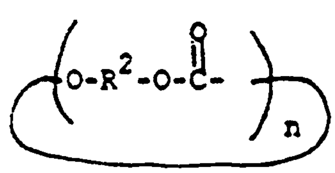 ,

wherein is at least about 60% of the total number of $R^2$ values are divalent aromatic organic radicals, the balance thereof being aliphatic, alicyclic or aromatic organic radicals and n is from 2 to about 30.

8. A method according to claim 7 wherein a mixture of cyclic polycarbonate oligomers is employed.

9. A method according to claim 8 wherein the basic reagent is an alkyli metal hydride.

10. A composition according to claim 9 wherein $R^1$ is an alkylene radical.

11. A composition according to claim 10 wherein the $R^2$ radicals have the formula

$$\text{(III)} \qquad -A^1-Y^1-A^2-,$$

wherein each of $A^1$ and $A^2$ is a monocyclic divalent aromatic radical and $Y^1$ is a bridging radical in which one or two atoms separate $A^1$ from $A^2$.

12. A composition according to claim 11 wherein $R^1$ contains a chain of 4-12 carbon atoms.

13. A method according to claim 12 wherein step A is conducted at a temperature within the range of 90-150°C.

14. A method according to claim 13 wherein step B is conducted at a temperature within the range of 90-150°C.

15. A composition according to claim 14 wherein each of $A^1$ and $A^2$ is p-phenylene and $Y^1$ is isopropylidene.

16. A composition according to claim 15 wherein $R^1$ is $(CH_2)_5$.

17. A method according to claim 16 wherein steps A and B are conducted in the melt.

**Patentansprüche**

1. Copolyamidcarbonat, enthaltend Struktureinheiten der Formeln

(I) 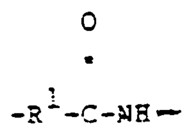 und

(II) 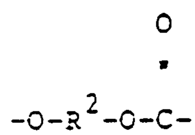

worin $R^1$ ein zweiwertiger aliphatischer Kohlenwasserstoff- oder substituierter Kohlenwasserstoffrest ist, enthaltend eine Kette von 2 - 20 Kohlenstoffatomen und wenigstens etwa 60 % der Gesamtzahl der $R^2$ Werte zweiwertige aromatische organische Reste sind, der Rest davon aliphatisch,alizyklisch oder aromatisch ist, das Copolyamidcarbonat durch Reaktion eines anionischen Zwischenproduktes aus wenigstens einem Lactam mit wenigstens einem zyklischen Polycarbonatoligomeren hergestellt wird, das Molverhältnis des zyklischen Oligomeren zum Lactam, bezogen auf die Struktureinheiten, 0,5:1 bis 5:1 beträgt.

2. Zusammensetzung nach Anspruch 1, worin $R^1$ ein Alkylenrest ist.

3. Zusammensetzung nach Anspruch 2, worin die $R^2$ Reste die Formel

$$\text{(III)} \qquad -A^1-Y^1-A^2-$$

aufweisen, worin jedes $A^1$ und $A^2$ ein monozyklischer zweiwertiger aromatischer Rest ist und $Y^1$ ein Brückenrest ist, in welchem ein oder zwei Atome $A^1$ von $A^2$ trennen.

4. Zusammensetzung nach Anspruch 3, worin $R^1$ eine Kette von etwa 4 - 12 Kohlenstoffatomen aufweist.

5. Zusammensetzung nach Anspruch 4, worin jedes $A^1$ und $A^2$ p-Phenylen ist und $Y^1$ Isopropyliden ist.

6. Zusammensetzung nach Anspruch 5, worin $R^1$ die Gruppierung $(CH_2)_5$ ist.

7. Verfahren zur Herstellung eines Copolyamidcarbonats, welches die folgenden Schritte umfaßt: A) Reaktion von wenigstens einem Lactam der Formel

(IV) 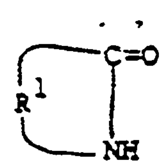 ,

worin $R^1$ ein zweiwertiger aliphatischer Kohlenwasserstoffoder substituierter Kohlenwasserstoffrest ist, enthaltend eine Kette von 2 - 20 Kohlenstoffatomen mit einem basischen Reagenz zur Bildung eines anionischen

Zwischenproduktes und (B) Umsetzung des Zwischenproduktes mit wenigstens einem zyklischen Polycarbonatoligomeren mit der Formel

(V) 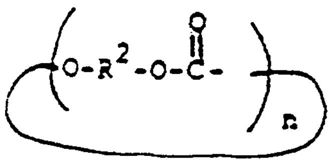 ,

worin wenigstens etwa 60 % der Gesamtzahl der $R^2$ Werte zweiwertige aromatische organische Reste sind, der Rest davon aliphatische, alizyklische oder aromatische organische Reste darstellt und n von 2 bis etwa 30 beträgt.

8. Verfahren nach Anspruch 7, worin eine Mischung aus zyklischen Polycarbonatoligomeren verwendet wird.

9. Verfahren nach Anspruch 8, worin das basische Reagenz ein Alkalimetallhydrid ist.

10) Zusammensetzung nach Anspruch 9, worin $R^1$ ein Alkylenrest ist.

11. Zusammensetzung nach Anspruch 10, worin die $R^2$ Reste die Formel

(III) $-A^1-Y^1-A^2-$

aufweisen, worin jedes $A^1$ und $A^2$ ein monozyklischer zweiwertiger aromatischer Rest ist und $Y^1$ ein Brückenrest ist, in welchem ein oder zwei Atome $A^1$ von $A^2$ trennen.

12. Zusammensetzung nach Anspruch 11, worin $R^1$ eine Kette von 4 bis 12 Kohlenstoffatome umfaßt.

13. Verfahren nach Anspruch 12, worin die Stufe A bei einer Temperatur im Bereich von 90 - 150°C durchgeführt Wird.

14. Verfahren nach Anspruch 13, worin die Stufe B bei einer Temperatur im Bereich von 90 - 150°C durchgeführt wird.

15. Zusammensetzung nach Anspruch 14, worin jedes $A^1$ und $A^2$ p-Phenylen ist und $Y^1$ Isopropyliden ist.

16. Zusammensetzung nach Anspruch 15, worin $R^1$ die Gruppierung $(CH_2)_5$ darstellt.

17. Verfahren nach Anspruch 16, worin die Stufen A und B in der Schmelze durchgeführt werden.

**Revendications**

1. Copolyamide-carbonate comprenant des motifs de base correspondant aux formules :

$$(I)\quad -R^1-\overset{\overset{\displaystyle O}{\|}}{C}-NH- \qquad \text{et}$$

$$(II)\quad -O-R^2-O-\overset{\overset{\displaystyle O}{\|}}{C}-$$

dans lesquelles $R^1$ représente un groupe hydrocarboné aliphatique bivalent ou un groupe hydrocarboné substitué contenant une chaîne de 2 à 20 atomes de carbone, au moins environ 60 % du nombre total des groupes $R^2$ étant des groupes organiques aromatiques bivalents, le reste de ceux-ci consistant en groupes aliphatiques, alicycliques ou aromatiques, le copolyamide-carbonate étant préparé en faisant réagir un intermédiaire anionique d'au moins un lactame, avec au moins un oligomère cyclique de polycarbonate, le rapport molaire de l'oligomère cyclique, eu égard aux motifs de base, au lactame, étant de 0,5:1 à 5:1.

2. Composition selon la revendication 1, dans laquelle $R^1$ représente un groupe alkylène.

3. Composition selon la revendication 2, dans laquelle les groupes $R^2$ correspondent à la formule suivante :

(III) $-A^1-Y^1-A^2-$

dans laquelle chacun des groupes $A^1$ et $A^2$, représente un groupe aromatique bivalent monocyclique, et $Y^1$ représente un groupe pontant dans lequel un ou deux atomes séparent le groupe $A^1$ du groupe $A^2$.

4. Composition selon la revendication 3, dans laquelle $R^1$ contient une chaîne contenant d'environ 4 à 12 atomes de carbone.

5. Composition selon la revendication 4, dans laquelle chacun des groupes $A^1$ et $A^2$, est un groupe p-phénylène, et $Y^1$ est un groupe isopropylidène.

6. Composition selon la revendication 5, dans laquelle $R^1$ représente un groupe $(CH_2)_5$.

7. procédé de préparation d'un copolyamidecarbonate, comprenant les étapes consistant (A) à faire réagir au moins un lactame de formule :

(IV) 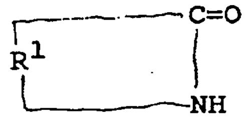

dans laquelle $R^1$ représente un groupe hydrocarboné aliphatique bivalent ou un groupe hydrocarboné substitué contenant une chaîne de 2 à 20 atomes de carbone, avec un réactif basique, pour former un intermédiaire anionique, et (B) à faire réagir cet intermédiaire avec au moins un oligomère cyclique de polycarbonate, de formule :

(V) 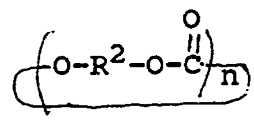

dans laquelle au moins environ 60 % du nombre total des groupes $R^2$, représentent des groupes organiques aromatiques bivalents, le reste de ceux-ci consistant en groupes organiques aliphatiques, alicycliques ou aromatiques, et n varie de 2 à environ 30.

8. Procédé selon la revendication 7, dans lequel on emploie un mélange d'oligomères cycliques de polycarbonate.

9. Procédé selon la revendication 8, dans lequel le réactif basique est un hydrure de métal alcalin.

10. Composition selon la revendication 9, dans laquelle $R^1$ représente un groupe alkylène.

11. Composition selon la revendication 10, dans laquelle les groupes $R^2$ correspondent à la formule :

(III) $-A^1-Y^1-A^2-$

dans laquelle chacun des groupes $A^1$ et $A^2$, est un groupe aromatique monocyclique bivalent, et $Y^1$ est un groupe pontant dans lequel un ou deux atomes séparent le groupe $A^1$ du groupe $A^2$.

12. Composition selon la revendication 11, dans laquelle $R^1$ contient une chaîne de 4 à 12 atomes de carbone.

13. Procédé selon la revendication 12, dans lequel l'étape A est effectuée à une température de 90 à 150 °C.

14. Procédé selon la revendication 13, dans lequel l'étape B est effectuée à une température de 90 à 150 °C.

15. Composition selon la revendication 14, dans laquelle chacun des groupes $A^1$ et $A^2$, est un groupe p-phénylène, et $Y^1$ est un groupe isopropylidène.

16. Composition selon la revendication 15, dans laquelle $R^1$ est un groupe $(CH_2)_5$.

17. Procédé selon la revendication 16, dans lequel les étapes A et B, sont effectuées à l'état fondu.